# EUROPEAN PATENT APPLICATION

(11) **EP 3 957 499 A1**
(43) Date of publication of application: **23.02.2022**
(21) Application number: 21163109.8
(22) Date of filing: 17.03.2021
(51) Int. Cl.: B60C 19/00, B32B 7/14, B32B 9/04, B32B 27/08, C09J 7/38, C09J 7/40

(54) **FOAM TAPE FOR SOUND-ABSORBING TIRE AND SOUND-ABSORBING TIRE COMPRISING THE SAME**

(30) Priority: 21.08.2020 KR 20200105148
(71) Applicant: HANKOOK TIRE & TECHNOLOGY CO., LTD, Gyeonggi-do 13494 (KR)
(72) Inventor: Jeong, Da Mi, 34127 Daejeon (KR)
(74) Representative: Petraz, Gilberto Luigi

(57) **Abstract**

The present invention relates to a foam tape (100) for a sound-absorbing tire, the foam tape including a release film (101); a tacky adhesive layer (102) formed underneath the release film; a base film (103) formed underneath the tacky adhesive layer; an adhesive layer (104) formed underneath the base film; and a sound-absorbing material layer (105) having a porous structure and formed underneath the adhesive layer, and the foam tape (100) having enhanced adhesive force to a tire, and the present invention also relates to a sound-absorbing tire including the foam tape for a sound-absorbing tire.

## Description

### BACKGROUND OF THE INVENTION

### 1. Field of the Invention

The present invention relates to a foam tape for a sound-absorbing tire, which can increase the adhesive force and the fixing force at the interface with a sound-absorbing material having a porous structure and at the interface with the inner liner of a tire and can increase the efficiency of the production process, and a sound-absorbing tire including this foam tape.

### 2. Description of the Related Art

Recently, as consumers increasingly pay attention to vehicle noise, research and development is in active progress in the tire industry in order to reduce the vehicle noise. Particularly, the issue of cavity resonance, which occurs when air in the rim and the cavity inside a tire vibrates due to the impacts that are irregularly inputted from the road surface during vehicle driving, is emerging as a result of an increasing demand of consumers for ultra-high performance tires.

In order to reduce such resonance noise, sound-absorbing tires having a sound-absorbing material attached inside the tire have been developed in the tire industry. Among the technologies associated with sound-absorbing tires, a technology for adhesion performance that can withstand the impacts from the road surface is one of the most important technologies. Using a rubber-based adhesive to attach a sound-absorbing material to the inner liner of a tire is a popularized adhesion technology, and in addition to that, various adhesives such as a silicone-based adhesive are in use. However, these methods for adhesion require a process of applying the adhesive inside the tire, and this process brings forth increases in the process-related manufacturing time and the manufacturing cost. Furthermore, it is necessary to adopt a technology that enables attachment of a sound-absorbing material without an application process, in order to eliminate the problems that may appear during the application process.

### SUMMARY OF THE INVENTION

An object of the present invention is to provide a foam tape for a sound-absorbing tire, which can increase the adhesive force and the fixing force at the interface with a sound-absorbing material having a porous structure and at the interface with the inner liner of a tire.

Another object of the present invention is to provide a foam tape for a sound-absorbing tire, which can increase the efficiency of a process for manufacturing a sound-absorbing tire.

Still another object of the present invention is to provide a sound-absorbing tire including the above-described foam tape.

In order to achieve the objects described above, a foam tape for a sound-absorbing tire according to an aspect of the present invention comprises a release film, a tacky adhesive layer formed underneath the release film, a base film formed underneath the tacky adhesive layer, an adhesive layer formed underneath the base film, and a sound-absorbing material layer having a porous structure and formed underneath the adhesive layer.

The release film and the base film may include any one resin selected from the group consisting of a polyester, polyethylene, polyethylene terephthalate, polyurethane, a thermoplastic polyurethane, polybutylene terephthalate, polyethylene naphthalate, polybutylene naphthalate, polypropylene, triacetyl cellulose, and copolymers of these.

The weight average molecular weight of the tacky adhesive included in the tacky adhesive layer may be 200,000 to 2,000,000, and the weight average molecular weight of the adhesive included in the adhesive layer may be 1,000 to 80,000.

The tacky adhesive layer may include any one or more selected from the group consisting of a rubber-based tacky adhesive, an acrylic tacky adhesive, a silicone-based tacky adhesive, and a urethane-based tacky adhesive.

The adhesive layer may include an olefin hot melt-based adhesive.

The sound-absorbing material may include a polyurethane foam.

A sound-absorbing tire according to another aspect of the present invention includes a tire inner liner and the above-described foam tape, the foam tape being attached to the tire inner liner by removing the release film and adhering the tacky adhesive layer to the tire inner liner.

A method for manufacturing a sound-absorbing tire according to another aspect of the present invention includes a step of removing a release film of the above-described foam tape; and a step of attaching the foam tape from which the release film has been removed, to the inner side of the tire inner liner.

According to the present invention, a foam tape for a sound-absorbing tire, which can enhance the adhesive force and fixing force at the interface with a sound-absorbing material having a porous structure and at the interface with the inner liner of a tire, can be provided.

The present invention can also provide a foam tape for a sound-absorbing tire, which can increase the efficiency of a process for manufacturing a sound-absorbing tire.

The present invention can also provide a sound-absorbing tire including the above-described foam tape.

### BRIEF DESCRIPTION OF THE DRAWINGS

FIG. 1 is a diagram illustrating a cross-section of a foam tape according to an embodiment of the present invention.
FIG. 2 is a diagram illustrating a cross-section of a sound-absorbing tire according to an embodiment of the present invention.

### DETAILED DESCRIPTION OF THE PREFERRED EMBODIMENTS

In the following description, embodiments of the present invention will be described in detail with reference to the attached drawings, so that those having ordinary skill in the art to which the present invention is pertained can easily carry out the invention. However, the present invention can be embodied in various different forms and is not intended to be limited to the embodiments described herein. The same reference numerals will be assigned to similar component parts throughout the specification.

The term "adhesion" according to the present invention means a property by which two solid surfaces are joined together, with a second substance serving as an adhesive interposed between the two surfaces. The adhesive has a characteristic that from the moment the adhesive is exposed to air for adhesion, the liquid adhesive is cured into a solid phase with an increase in the adhesive strength, and when the adhesive is completely brought into a solid state, the adhesive in the solid state and the two solid surfaces are integrated.

The term "tacky adhesiveness" according to the present invention means a property in which the adhesive force gradually increases so that there is a sufficient amount of time until a solid cured state is reached, and thereby attachment and detachment is enabled for a certain period of time. A tacky adhesive composition is in an intermediate form (polymer) having both the properties of a liquid and the properties of a solid, and has a feature that upon being stuck to an adherend surface, the composition exhibits highly viscous liquid properties at the site of contact, while the composition exhibits detachment-resistant solid properties upon being detached. Therefore, in the early stage of adhesion, the tacky adhesive composition has a weak adhesive force between the surfaces to be attached and thus can be detached for the purpose of correcting the site of attachment or the like; however, after the composition is attached, the adhesive force of the tacky adhesive is increased as time passes, and after a certain amount of time, detachment between the surfaces to be attached is made difficult, while the tacky adhesive composition finally becomes solid, making the detachment and reattachment no longer possible.

An adhesive and a tacky adhesive are both products that utilize the properties of petrochemical products of instantaneously changing from a liquid state to a solid state when exposed to air. However, a tacky adhesive takes a relatively long time to be completely cured into a solid and enables easy detachment and reattachment of the adherend surfaces for a certain amount of time, whereas an adhesive takes a very short time to be cured into a solid, so that once the adhesive is applied on an adherend surface and is stuck thereto, detachment of the adherend surface is very difficult.

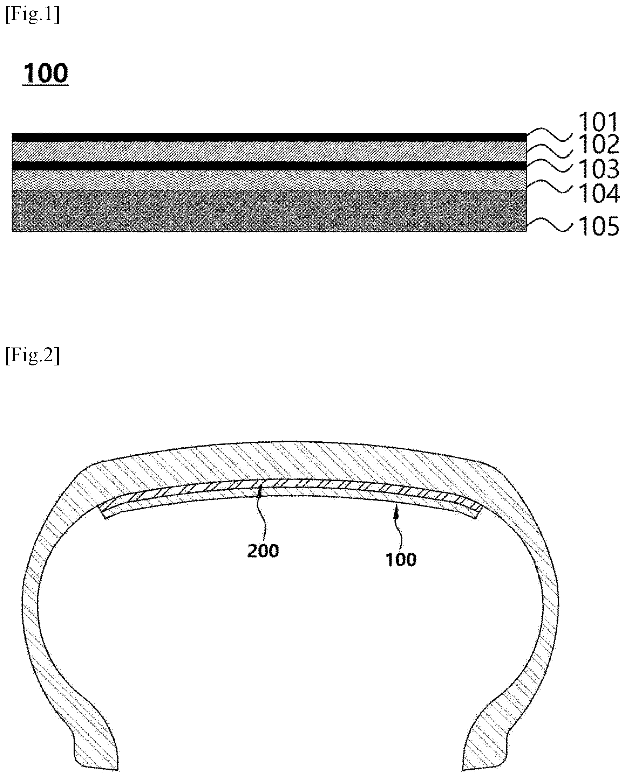

A cross-sectional view of the foam tape for a sound-absorbing tire according to an embodiment of the present invention is shown in FIG. 1.

According to FIG. 1, the foam tape (100) for a sound-absorbing tire according to the present invention includes a release film (101); a tacky adhesive layer (102) formed underneath the release film (101); a base film (103) formed underneath the tacky adhesive layer (102); an adhesive layer (104) formed underneath the base film (103); and a sound-absorbing material layer (105) having a porous structure and formed underneath the adhesive layer (104).

The foam tape (100) has a feature of including an adhesive layer (104), unlike other existing sound-absorbing materials, and having a tacky adhesive layer (102) and a detachable release film (101) on top of the adhesive layer (104). Conventionally, a sound-absorbing material layer (105) is attached directly to the inner liner using an adhesive layer (104) in order to reduce the resonance noise of a tire, and due to the short curing time of the adhesive layer (104), a separate process of precisely applying an adhesive layer on the inner side of the inner liner is required during the tire manufacturing process. However, the foam tape (100) for a sound-absorbing tire according to the present invention has an effect of simplifying the tire manufacturing process because the tacky adhesive layer (102) can be directly attached to the inner side of the inner liner after removing the release film (101) in the tire manufacturing process. Unlike the adhesive layer (104), the tacky adhesive layer (102) has the release film (101) attached thereto while being in a state of incompletely cured, so that the release film can be detached. When the tacky adhesive layer (102) is attached to the inner side surface of the inner liner after the release film (101) is detached therefrom, the tacky adhesive layer (102) is gradually cured to solid, and when the tacky adhesive layer (102) is completely cured to solid, the layer acquires excellent adhesive power. In the case of general tacky adhesive compositions, those compositions exhibit the maximum adhesive force after 72 hours, and detachment and reattachment may become no longer possible. However, the tacky adhesive of the present invention is not limited by the above-described time.

Furthermore, conventionally, the inner liner and the sound-absorbing material layer may be attached to each other by using a tacky adhesive layer (102) only in order to reduce the resonance noise of the tire; however, a general tacky adhesive includes long-chained polymers and have a problem that the polymer molecules of the tacky adhesive cannot infiltrate into the pore portions of the sound-absorbing material layer, making the area of contact small, and thus, the adhesive force is lowered. However, the present invention uses an adhesive substance having short molecular chain lengths, which can sufficiently infiltrate into the pores of the sound-absorbing material layer, and thus, the adhesive force between the inner liner and the sound-absorbing material layer can be increased.

When the tacky adhesive is applied on the sound-absorbing material layer (105) having a porous structure, the adhesive strength is decreased due to the porous structure of the sound-absorbing material layer, and there may be a problem that even if the tacky adhesive layer (102) is cured to a solid state, the tacky adhesive layer (102) may be easily detached from the sound-absorbing material layer (105) having a porous structure. Therefore, the sound-absorbing material layer (105) having a porous structure is attached to a base film (103) using an adhesive layer (104), and then a tacky adhesive layer (102) is formed on top of the base film. Since this base film does not have a porous structure, even when the tacky adhesive layer is attached to the inner liner and completely cured to a solid state, excellent adhesive force can be maintained.

The tacky adhesive that is included in the tacky adhesive layer (102) may be a substance having a weight average molecular weight of 200,000 to 2,000,000. The tacky adhesive layer (102) is formed of a substance having a large weight average molecular weight and has an advantage that due to the long molecular chains, the curing time is long, and detachment and reattachment is enabled for a certain amount of time. On the other hand, the tacky adhesive layer has a disadvantage that the tacky adhesive molecules cannot infiltrate into the pores of the sound-absorbing material layer (105) having a porous structure, and the adhesive force is deteriorated. When the weight average molecular weight of the tacky adhesive is smaller than 200,000, detachment of the release film may be difficult, and when the weight average molecular weight of the tacky adhesive is larger than 2,000,000, the time required by the tacky adhesive to be cured to a solid state becomes excessively long, and there may be a problem that the adhesive force to the inner liner may be lowered.

The adhesive that is included in the adhesive layer (104) may be a substance having a weight average molecular weight of 1,000 to 80,000, preferably 3,000 to 50,000, and more preferably 10,000 to 30,000. The adhesive layer (104) is formed of a substance having a small weight average molecular weight, with which the curing time is short due to the short molecular chains, the short molecular chains can infiltrate into the pores of the sound-absorbing material layer (105) having a porous structure, and the sound-absorbing material layer (105) having a porous structure can be effectively adhered to the base film (103). When the weight average molecular weight of the adhesive is larger than 80,000, the adhesive cannot infiltrate into the pores of the porous sound-absorbing material layer due to the long molecular chain lengths, and the adhesive force between the adhesive and the porous sound-absorbing material layer may be deteriorated. When the weight average molecular weight is smaller than 1,000, there may be a problem that the adhesive excessively infiltrates into the pores of the porous sound-absorbing material layer.

The tacky adhesive layer (102) and the release film (101) should have an appropriate tacky adhesive force in order to be easily detached at the time of use; however, the tacky adhesive layer (102) should be strongly bonded with the rubber surface such as the inner liner and the base film (103), to which the tacky adhesive layer (102) is applied after having the release film (101) peeled off therefrom.

On the other hand, the adhesive layer (104) is required to have strong bonding force to the base film (103) and the sound-absorbing material layer (105) having a porous structure.

The tacky adhesive layer (102) may include any one selected from the group consisting of a rubber-based tacky adhesive, an acrylic tacky adhesive, a silicone-based tacky adhesive, and a urethane-based tacky adhesive.

Among the above-described tacky adhesives, an acrylic tacky adhesive having excellent tacky adhesive characteristics and excellent weather resistance and heat resistance can be preferably used. An acrylic tacky adhesive is a saturated polymer having no double bond in the molecule, and since the substance has excellent resistance to oxidation in view of the intrinsic properties, the acrylic tacky adhesive exhibits excellent weather resistance. Furthermore, modification of the substance is easily achieved by changing the polymer composition, introducing a functional group, or the like according to the required physical properties. From the viewpoint of productivity as well, an acrylic tacky adhesive can be relatively easily produced at normal temperature and normal pressure through emulsion polymerization or solution polymerization.

The main component of an acrylic tacky adhesive is an acrylic ester that can be used to synthesize a flexible and viscous polymer having a low glass transition temperature (Tg), and the main component may be generally an alkyl acrylate having 4 to 17 carbon atoms and more specifically any one selected from the group consisting of methyl acrylate, 2-ethylhexyl acrylate, butyl acrylate, and copolymers of these.

The adhesive layer (1) may be an olefin hot melt-based adhesive. An olefin-based adhesive is configured by using an olefin-based copolymer having advantages of excellent flexibility and cheap price, such as an ethylene-vinyl acetate copolymer, an ethylene-acrylic acid ester copolymer, or an ethylene-vinyl acetate copolymer as a base polymer, and adding a tackifier, a viscosity regulating agent, and the like. A hot melt adhesive is an adhesive applicable by melting under heat and has an advantage of being environment-friendly because the discharge of volatile organic solvent is very small.

Furthermore, an olefin hot melt-based adhesive has features such as that the molecular chain length is short, and that as the temperature increases, viscosity is lowered while fluidity is increased. Due to these features, an olefin hot melt-based adhesive is easily absorbed into a porous structure at high temperature and can be absorbed by and strongly bonded to the porous structure due to the large area of the porous structure. Therefore, an olefin hot melt-based adhesive is preferable for adhering the sound-absorbing material layer (105).

In the present invention, the adhesive layer (104) and the tacky adhesive layer (102) are separated by a base film (103), and the adhesive layer (104) can increase the adhesive force to the sound-absorbing material layer (105) having a porous structure, while the tacky adhesive layer enables detachment of the release film (101) and helps the foam tape for a sound-absorbing tire to be easily attached to the inner liner. Furthermore, the base film (103) has an effect of blocking the heat transferred from the inner liner and preventing the fall-off of the sound-absorbing material caused by heat generation of the adhesive.

The release film (101) plays the role of protecting the performance of the tacky adhesive layer (102) before the foam tape (100) is applied to a sound-absorbing tire, allows the foam tape to be stored in the form of being wound, and has a feature of being easily peeled off upon use, which enables shortening the process time for the manufacture of a sound-absorbing tire.

The base film (103) plays the role of supporting the tacky adhesive layer (102) and the adhesive layer (104).

Specifically, the release film (101) and the base film (103) may include any one resin selected from the group consisting of a polyester, polyethylene, polyethylene terephthalate, polyurethane, a thermoplastic polyurethane, polybutylene terephthalate, polyethylene naphthalate, polybutylene naphthalate, polypropylene, triacetyl cellulose, and copolymers of these.

Preferably, the release film (101) may be a polyester or polyethylene film. A polyester film is excellent in terms of insulation properties, glossiness, dimensional stability, planarity, and handling characteristics, while a polyethylene film has weak tensile strength but has features such as excellent impact resistance, good processability, and convenient use properties.

The release film (101) and the base film (103) may be formed of the same material or may be formed of different materials; however, there is no particular limitation.

It is preferable that the sound-absorbing material layer (105) having a porous structure includes a polyurethane foam as the sound-absorbing material. The polyurethane foam can be produced basically by subjecting a polyisocyanate compound and a polyhydroxy compound to a urethane reaction. The polyurethane foam refers to a polyurethane-based sound-absorbing material having open cells and may have a density of 18 to 35 kg/m³.

Regarding a conventional technology for reducing resonance noise, there is available a technology of utilizing a foam of a polyurethane material having open cells. However, in the case of using a general liquid adhesive to attach such a foam of a polyurethane material to the inner liner (200) on the inner side of a tire, the polyurethane foam having open cells has a problem that the adhesive having low viscosity is absorbed by the polyurethane foam in an excessive degree, and adhesion to the inner liner is difficult.

The present invention can address such a problem by using the base film (103) as a support and applying the tacky adhesive layer (102) and the adhesive layer (104) together.

Specifically, as the tacky adhesive layer (102) having strong adhesive force to the rubber interface of the inner liner and the base film (103), and the adhesive layer (104) having strong adhesive force to the base film (103) and the sound-absorbing material (105) having a porous structure are applied together, the problem that the adhesive is absorbed into the porous structure, resulting in weakened adhesive force to the inner liner, can be solved.

Hereinafter, a sound-absorbing tire to which the above-described foam tape (100) is applied will be described. A cross-sectional view of the sound-absorbing tire according to an embodiment of the present invention is shown in FIG. 2.

To explain the present invention with reference to FIG. 2, the sound-absorbing tire according to the present invention includes a tire inner liner (200) and a foam tape (100) that is attached to the inner side of the inner liner (200).

The foam tape (100) may be attached after the release film is removed before being attached to the inner liner (200). In order to increase the adhesive force of the foam tape (100), it is preferable that the surface of the inner liner has a flat structure without any foreign materials or protrusions.

The foam tape can be prepared by producing the foam tape in large quantities in advance before the tire manufacturing process, and during the tire manufacturing process, the release film can be detached and the tacky adhesive layer can be simply attached to the surface of the inner liner without any separate process for applying an adhesive or a tacky adhesive. Thus, the foam tape has an advantage of simplifying the tire manufacturing process.

Hereinafter, Examples of the present invention will be described in detail so that those ordinarily skilled in the art to which the present invention is pertained can easily carry out the invention. However, the present invention can be embodied in various different forms and is not intended to be limited to the Examples described herein.

### [Production Example 1: Production of sound-absorbing tire]

As shown in the following Table 1, in Example 1, a sound-absorbing tire was produced by using an acrylic tacky adhesive and an olefin hot melt-based adhesive in combination and attaching a polyurethane foam in the form of a foam tape to the inner liner of a tire. In Comparative Example 1, a sound-absorbing tire was produced by attaching a sound-absorbing material to the inner liner of a tire using a double-sided tacky adhesive foam tape.

**[Table 11**

| | Example 1 | Comparative Example 1 |
|---|---|---|
| Sound-absorbing material | Polyurethane foam | Polyurethane foam |
| Structure | Combination of adhesion tacky adhesion | Double-sided tacky adhesion |
| Tacky adhesive | Acrylic tacky adhesive | Acrylic tacky adhesive |
| Adhesive | Olefin hot melt-based adhesive | - |

### [Experimental Example 1: Temperature-dependent static load evaluation of sound-absorbing tire]

A static load evaluation was performed for the sound-absorbing tires produced in Example 1 and Comparative Example 1 as described above, and the results are presented in the following Table 2. The static load evaluation was carried out by a method of suspending a 2-kg weight to a sound-absorbing material having a porous structure, which was attached to a sound-absorbing tire, and checking the presence or absence of detachment of the foam after a lapse of 120 hours. The static load evaluation was carried out by making three measurements while varying the temperature conditions to normal temperature (25°C), low temperature (-15°C), and high temperature (80°C).

**[Table 2]**

| Item | Temperature | Example 1 | Comparative Example 1 |
|---|---|---|---|
| Static load evaluation | 25°C | Attachment maintained | Detached |
| | -15°C | Attachment maintained | Detached |
| | 80°C | Attachment maintained | Detached |

As shown in Table 2, Example 1 was an example of applying a configuration of using adhesion and tacky adhesion in combination and showed static load evaluation results superior to Comparative Example 1. It was verified that not only under normal temperature conditions but also under low temperature (-15°C) and high temperature (80°C) conditions, Example 1 exhibited superior attachment performance compared to Comparative Example 1.

In the case of Comparative Example 1 having a double-sided tacky adhesion structure, it is speculated that due to the porous structure of the polyurethane foam used as a sound-absorbing material, the tacky adhesive having a long molecular chain structure cannot penetrate into the pores of the polyurethane foam, the cross-sectional area of contact between the tacky adhesive and the polyurethane foam is reduced, the adhesive force is reduced, consequently peeling occurs at the interface, and a phenomenon of detachment between the foam tape for a sound-absorbing tire and the inner liner occurs.

On the other hand, in the case of Example 1 in which the interface of the sound-absorbing material was treated with an adhesive, it is speculated that the adhesive having short molecular chain length is quickly absorbed into the porous structure of the polyurethane foam and cured, a phenomenon of detachment between the foam tape for a sound-absorbing tire and the inner liner is prevented, and in the case of the foam tape treated with an adhesive at the interface with the sound-absorbing material as in Example 1, a peeling phenomenon did not occur. This implies that a foam tape adopting the mode of attachment by combined use of adhesion and tacky adhesion is advantageous in the attachment performance, as compared to a foam tape adopting the mode of attachment by double-sided tacky adhesion. These results suggest a possibility of utilization of the developed foam tape for the technology of attachment for sound-absorbing tires.

Preferred embodiments of the present invention have been described above in detail; however, the scope of rights of the present invention is not limited to this, and various modifications and improvements made by those ordinarily skilled in the art using the basic concept of the present invention as defined in the following claims are also included in the scope of rights of the present invention.

### Reference Numeral List

100: Foam tape
101: Release film
102: Tacky adhesive layer
103: Base film
104: Adhesive layer
105: Sound-absorbing material layer
200: Inner liner

## Claims

1. A foam tape for a sound-absorbing tire, the foam tape comprising:
a release film;
a tacky adhesive layer formed underneath the release film;
a base film formed underneath the tacky adhesive layer;
an adhesive layer formed underneath the base film; and
a sound-absorbing material layer having a porous structure and formed underneath the adhesive layer.

2. The foam tape for a sound-absorbing tire according to claim 1, wherein the release film and the base film include any one resin selected from the group consisting of a polyester, polyethylene, polyethylene terephthalate, polyurethane, a thermoplastic polyurethane, polybutylene terephthalate, polyethylene naphthalate, polybutylene naphthalate, polypropylene, triacetyl cellulose, and copolymers of these.

3. The foam tape for a sound-absorbing tire according to claim 1, wherein the weight average molecular weight of the tacky adhesive included in the tacky adhesive layer is 200,000 to 2,000,000, and
the weight average molecular weight of the adhesive included in the adhesive layer is 1,000 to 80,000.

4. The foam tape for a sound-absorbing tire according to claim 1, wherein the tacky adhesive layer includes any one or more selected from the group consisting of a rubber-based tacky adhesive, an acrylic tacky adhesive, a silicone-based tacky adhesive, and a urethane-based tacky adhesive.

5. The foam tape for a sound-absorbing tire according to claim 1, wherein the adhesive layer includes an olefin hot melt-based adhesive.

6. The foam tape for a sound-absorbing tire according to claim 1, wherein the sound-absorbing material layer includes a polyurethane foam.

7. A sound-absorbing tire comprising:
a tire inner liner; and
the foam tape according to any one of claims 1 to 6,
wherein the foam tape is attached to the tire inner liner by removing the release film and attaching the tacky adhesive layer to the tire inner liner.

8. A method for manufacturing a sound-absorbing tire, the method comprising:
a step of removing the release film of the foam tape according to any one of claims 1 to 6; and
a step of attaching the foam tape from which the release film has been removed, to the inner side of the tire inner liner.
